# EUROPÄISCHE PATENTSCHRIFT

(11) **EP 0 763 467 B1**
(45) Veröffentlichungstag und Bekanntmachung des Hinweises auf die Patenterteilung: **07.11.2001**
(21) Anmeldenummer: 96112299.1
(22) Anmeldetag: 30.07.1996
(51) Int. Cl.: B64D 11/06, B60N 2/48

(54) **Passagiersitz mit einer Versorgungseinheit für Passagiere, insbesondere in einer Passagierkabine eines Flugzeuges**
Passenger seat with a passenger service unit, particularly for aircraft passengers
Siège pour passagers avec une unité de service pour passagers, en particulier pour passagers d'avion

(30) Priorität: 14.09.1995 DE 19533981
(43) Veröffentlichungstag der Anmeldung: 19.03.1997
(73) Patentinhaber: EADS Airbus GmbH, 21129 Hamburg (DE)
(72) Erfinder: Schumacher, Markus, 21614 Buxtehude (DE); Muin, Andrew, 21614 Buxtehude (DE)
(74) Vertreter: Hansmann, Dierk, Dipl.-Ing.

(56) Entgegenhaltungen:
- EP-A- 0 346 299
- EP-A- 0 368 609
- DE-A- 3 719 105
- FR-A- 2 228 652
- US-A- 5 387 026

## Beschreibung

Die Erfindung betrifft einen Passagiersitz mit einer Versorgungseinheit für Passagiere, insbesondere in einer Passagierkabine eines Flugzeuges, mit Komfort- und Bedienelementen, wie Leseleuchte, Stewardruftaste, Lautsprecher, Luftdüse, Sauerstoffmaske und generator und optische Anzeigeelemente, und Zuführleitungen zwischen einer Versorgungsleitung und der Versorgungseinheit.

Aus DE 43 01 681 C1 ist bekannt, daß sich in der Kabine eines Passagierflugzeuges derartige Versorgungseinheiten - passenger service unit (PSU) genannt - jeweils für eine Sitzreihe unterhalb der im oberen Kabinenbereich angeordneten Gepäckablagen befinden. In zunehmendem Maße werden solche Gepäckablagen mit einer absenkbaren Schale ausgestattet.. Dies läßt aber eine Position der Versorgungseinheit im Bereich der Mitte einer Sitzreihe nicht zu, da diese bei Abwärtsbewegung der Schale mit derselben kollidiert. Folglich werden die Versorgungseinheiten nach bekannter Art in Richtung Fenster verlegt, wo sie aber für die gangseitigen Passagiere schlecht erreichbar sind. So entsteht ein Konfliktbereich, wobei insbesondere die Passagiere, die die Versorgungseinheit schlechter erreichen, die anderen Passagiere beim Zugriff zur Versorgungseinheit stören können.
Ein großzügiger Raumeindruck der Passagierkabine ist ein weiteres wesentliches Merkmal, das für den Komfort und das Wohlbefinden der Passagiere ausschlaggebend ist. Die Anordnung der Versorgungseinheit verschlechtert diesen positiven Eindruck. Infolge des jeweils notwendigen Zugriffsbereiches eines Passagieres zur Versorgungseinheit wird der freie Kopfbereich eingeschränkt und die Kabineninnenkontur ist entsprechend niedrig an dieser Stelle.
Bei einer Sitzlayoutänderung innerhalb der Passagierkabine sind darüber hinaus die Versorgungseinheiten ebenfalls neu zu positionieren. Das bedeutet einen erheblichen zusätzlichen Montage- und Wartungsaufwand.

Fluggastsitze, die zur Versorgung der Passagiere bestimmte Komfort- und Bedienelemente aufweisen, sind ebenfalls bekannt. Beispielsweise zeigt die DE 37 19 105 A1 einen Fluggastsitz, in den Kommunikationselemente, wie Empfangsteile, Lautsprecher, Video-Anschlüsse, Bedienelemente und Leseleuchten integriert sind. Die Kommunikations- und Bedienelemente werden hierbei mittels eines drahtlos arbeitenden Informationssystems gespeist und mit einer dem Sitz zugeordneten Energiequelle betrieben.

Aus DE 42 27 377 A1 ist ein weiterer Fluggastsitz bekannt, der ein Sauerstoffnotsystem enthält. Wie eine Anordnung von weiteren Komponenten für die Versorgung der Passagiere erfolgt, ist dieser Lösung nicht entnehmbar.

Für die Durchführung von Versorgungs-, Überwachungs-, Unterhaltungs-, Informations- und Managementfunktionen wird in DE 34 44 802 C2 vorgeschlagen, daß Datenterminals am Passagiersitz, insbesondere an den Rückseiten der Rückenlehnen angeordnet sind. Der Fluggast kann mittels des Terminals Informationen sammeln, bestimmte Arbeiten ausführen oder sich unterhalten lassen. Über die Anordnung anderer passagierbezogener Systeme, wie Stewartruf, Bordsprechanlage, Leseleuchten und Luftdüsen ist der Schrift nichts entnehmbar.
Der bekannte Stand der Technik zeigt somit Einzelkomponenten bzw. Einzelsysteme, die von einem Gesamtversorgungssystem weitgehend unabhängig funktionieren, in einen Sitz integriert werden können und somit baulicher Bestandteil des Sitzes sind. Eine funktionale Zusammenlegung aller Komponenten, die von einer Versorgungsleitung gespeist und in Form einer Versorgungseinheit - getrennt vom Fluggastsitz - dem Passagier zur Verfügung stehen, ist aber nicht bekannt.

Demgemäß liegt der Erfindung die Aufgabe zugrunde, eine Kombination von Passagiersit und Versorgungseinheit derart auszubilden, daß alle passagierbezogenen Versorgungsfunktionen zusammengefaßt und im Zugriffsbereich eines sitzenden Passagieres bequem erreichbar sind. Eine Integration der Versorgungsfunktionen in einen Fluggastsitz soll vermieden werden, um eine Trennung von flugzeugspezifischen Systemen und Fluggastsitzen zu erreichen. Weiterhin sind störende Bauteile im Kopfbereich der Passagiere zu vermeiden.

Diese Aufgabe wird mit den in Patentanspruch 1 angegebenen Maßnahmen gelöst.

Dabei ist insbesondere von Vorteil, daß der auf seinem Sitzplatz befindliche Passagier bequem die Versorgungsfunktionen bedienen kann, ohne seinen Nachbarn zu stören. Durch Wegfall der Passagierversorgungsfunktionen im Bereich unterhalb der Gepäckablagen wird ein großzügiger Raumeindruck der Passagierkabine erreicht, was sich auf den Komfort und das Wohlbefinden der Passagiere positiv auswirkt.

Auch ist mit der sitzzugeordneten Anordnung aller Passagierversorgungsfunktionen bei Änderungen des Sitzlayouts keine aufwendige Anpassung der Versorgunseinheit notwendig und die Layoutflexibilität ist entscheidend verbessert.

Mit der Zusammenlegung aller Einzelkomponenten in eine Versorgungseinheit ist eine gesonderte Anbringung von Komfort- und Bedienelementen weitgehend verzichtbar und somit der Montage- und Wartungsaufwand verringert. Es wird eine funktionale Übersichtlichkeit erreicht, die einem Passagier die Bedienung der Versorgungsfunktionen erleichtert.

Weiterbildungen und zweckmäßige Ausgestaltungen ergeben sich aus den Unteransprüchen 2 - 8.

Mit den Maßnahmen gemäß Anspruch 2 bzw. 3 ist erreicht, das für einen Passagier ein individueller Rückzugsraum zur Verfügung gestellt werden kann. Vom schlafenden Passagier werden so Kabinenlicht und störende Einflüsse der Nachbarn ferngehalten.
Die Ausgestaltung gemäß Anspruch 4 ermöglicht, daß innerhalb des Lehnenbügels Zuführleitungen zu den Komfort- und Bedienelementen angeordnet sein können oder der Hohlraum des Lehnenbügels selbst als Leitung, beispielsweise zur Luftführung, genutzt wird.
Mit der Realisierung der Maßnahme gemäß Anspruch 5 sind zusätzliche Bedienfunktionen im unmittelbaren Zugriffsbereich eines Passagiers leicht erreichbar. Die Ausgestaltung gemäß Anspruch 6 ist geeignet, individuelle visuelle Programme für jeden Passagiersitz separat zur Verfügung zu stellen. Bedarfsweise kann die Projektionseinrichtung herausgeklappt oder in die Innenseite des Bügels eingeklappt werden.
Die Ausgestaltungen gemäß der Ansprüche 7 bzw. 8 zeigen Anschlußmöglichkeiten der Versorgungseinheit an eine zentrale Versorgungsleitung.

Die Erfindung wird nachstehend beschrieben, wobei die Ausbildung der Versorgungseinheit anhand der in der Zeichnung dargestellten Ausführungsbeispiele näher erläutert ist. In den Figuren sind gleiche Bauteile mit gleichen Bezugszeichen versehen.
Die Zeichnung zeigt
- in Fig. 1: eine Sitzgruppe in einer Ausgestaltung der Versorgungseinrichtung als Lehnenbügel mit einer kapuzenartigen Abdeckung,
- in Fig. 2: ein Teilansicht eines Sitzes mit Lehnenbügel und
- in Fig. 3: eine Sitzgruppe in einer Ausgestaltung der Versorgungseinrichtung als Lehnenbügel mit seitlichen Abdeckmitteln.

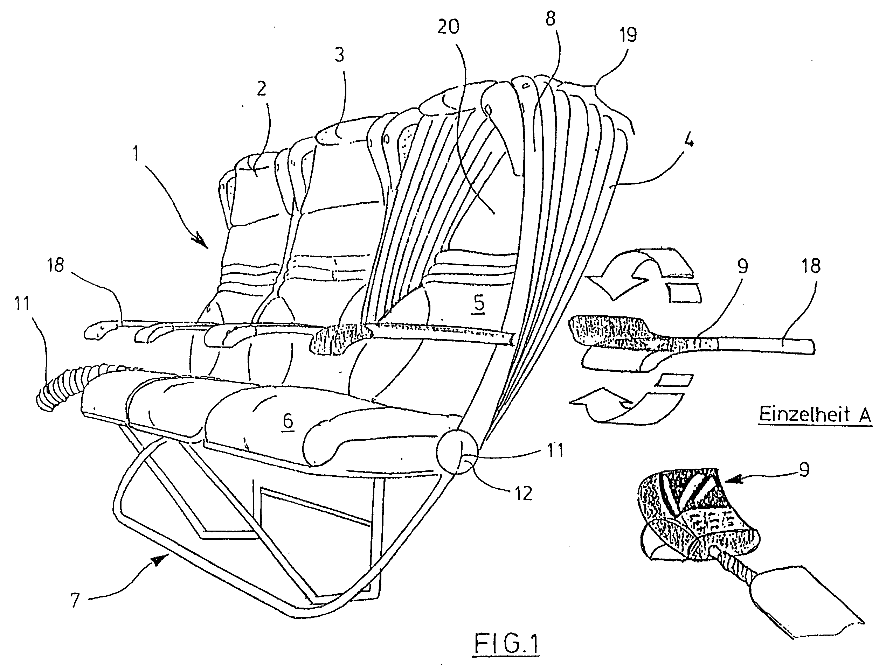

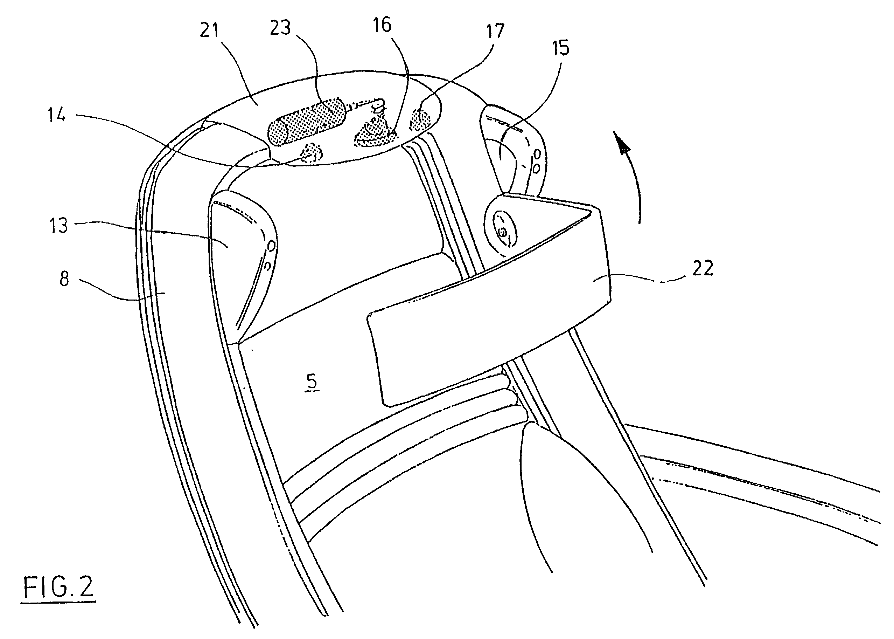

Die Fig. 1 zeigt eine Sitzgruppe 1, die aus mehreren Sitzen 2, 3, 4 mit jeweils einer Rückenlehne 5 und einem Sitzteil 6 besteht. Die Sitze 2, 3, 4 sind auf einem Traggestell 7 ortsfest angebracht. Jedem Sitz 2, 3, 4 ist unmittelbar eine Versorgungseinheit zugeordnet, die alle wesentlichen Komfort- und Bedienelemente für einen Passagier enthält. So kann der auf seinem Sitzplatz befindliche Passagier bequem die Komfort- und Bedienelemente bedienen, ohne seinen Nachbarn zu stören. Die sitzzugeordnete Anordnung der Versorgungseinheit ist so ausgeführt, daß die Passagierversorgungsfunktionen innerhalb der Sitzstruktur als baulicher Bestandteil eines Sitzes vorgesehen sind.
Die Ausführungsform der Versorgungseinheit in Fig. 1 zeigt einen Lehnenbügel 8 als baulichen Bestandteil des jeweiligen Sitzes 2, 3 oder 4 ist. Der vorzugsweise hohle und starr ausgebildete Lehnenbügel 8 umsäumt in dieser Ausgestaltung die Kontur der Rückenlehne 5. Im bzw. am Lehnenbügel 8 sind alle sitzzugeordneten Passagierversorgungsfunktionen untergebracht. Die Zuführleitungen zu den Bedien- und Komfortelementen liegen innerhalb des hohlen Lehnenbügels 8 oder der Hohlraum des Bügels 8 kann selbst als Leitung genutzt werden. Eine mögliche Anordnung bestimmter Komfort- und Bedienelemente am Lehnenbügel 8 ist in Fig. 2 gezeigt. An den Armlehnen 18, die am Lehnenbügel 8 angeordnet sind, können ebenfalls bestimmte Bedienelemente vorgesehen sein, wie eine in Arbeitsposition drehbare Bedieneinrichtung 9, die als Einzelheit A vergrößert dargestellt ist.

Der Lehnenbügel 8 ist vorteilhaft am Traggestell 7 der Sitzgruppe 1 starr fixiert. Möglich ist eine Befestigung an der ortsfesten Schwenkachse der Rückenlehne 5. Ein flexibles Versorgungsrohr 11 stellt eine Verbindung vom entsprechenden Lehnenbügel 8 eines Sitzes 2, 3 oder 4 zur zentralen Versorgung mittels einer Versorgungsleitung (nicht gezeigt) in Nähe der Flugzeugverkleidung her. Die Versorgungsleitung enthält für alle in dem Lehnenbügel befindlichen Komfort- und Bedienelementen die notwendigen Funktionsmittel in separaten Leitungen, wie beispielsweise eine Luftleitung für die Frischluftzufuhr der Luftdüsen 17 und elektrische Energie- bzw. Signalübertragungsleitungen für die Leseleuchte 14 oder den optischen Anzeigeelementen in der Bedientafel 9. Ein Blinddeckel 12 deckt das gangseitige Ende des Versorgungsrohres 11 ab. Denkbar ist auch ein Anschluß des Lehnenbügels 8 an der Fußbodenstruktur, wobei dann eine zentrale Versorgungsleitung im Bereich der Sitzschienen angeordnet ist.
Eine mögliche Abschirmung eines Passagiersitzes 2, 3 bzw. 4 ist mittels Abdeckmitteln 19 erreichbar. So ist für einen schlafenden Fluggast ein Rückzugsraum 20 geschaffen, der ihn vor Kabinenlicht und Störeinflüsse des Nachbarn fernhält. Die Abdeckmittel 19 sind zwischen der verstellbaren Rückenlehne 5 und dem starren Lehnenbügel 8 vorgesehen. Während der Lehnenbügel 8 in seiner aufrechten Stellung verharrt, kann die Rückenlehne 5 um ihre Schwenkachse in Schlafposition abgesenkt werden. Lehnenbügel 8 und Rückenlehne 5 sind über eine faltenbalgartige Kapuze 19 miteinander verbunden. Wenn die Rückenlehne 5 zurückgeneigt wird, entsteht somit der strandkorbähnliche Rückzugsraum 20. Bei hochgestellter Rückenlehne 5 ist die Kapuze 19 zusammengefaltet und von dem Lehnenbügel 8 verdeckt.

Wie eine mögliche Anordnung bestimmter Komfort- und Bedienelemente am Lehnenbügel 8 im Kopfbereich eines Passagiersitzes aussehen kann, ist in Fig. 2 gezeigt. Oberhalb des Kopfes eines Passagiers ist der Lehnenbügel. 8 mit einem. Kopfelement 21 versehen, der wichtige Versorgungselemente enthält. Die. Sauerstoffmaske 16 gelangt bei einer solchen Anordnung oberhalb des Kopfes bei Bedarf in den unmittelbaren Gesichtskreis des Passagieres und kann so sofort gegriffen werden. Der Sauerstoffgenerator 23, Luftdüsen 17 und Leseleuchte 14 sind ebenfalls in das Kopfelement 21 integriert. Eine vorteilhafte Beleuchtung ist mittels Faseroptik erreichbar.
Die Sichtblende 13 am oberen Teil des Lehnenbügels 8 enthält Lautsprecher 15, die sowohl für allgemeine Durchsagen als auch für individuelle Programme nutzbar sind.
Eine Projektionseinrichtung 22 ist aus der Innenseite des oberen Bereiches des Lehnenbügels 8 herausklappbar. An der Innenseite dieser Projektionseinrichtung 22 ist eine Projektionsfläche mit virtuellem Fokus (Sensor round visor) vorgesehen. Damit können optische Informationen oder auch individuelle Programme dem Passagier zur Verfügung gestellt werden. Wenn die Projektionsfläche 22 nicht genutzt wird, ist sie entsprechend der Pfeilrichtung an den Lehnenbügel heranklappbar und somit aus dem Sicht- und Bewegungsbereich des Passagieres entfernt.

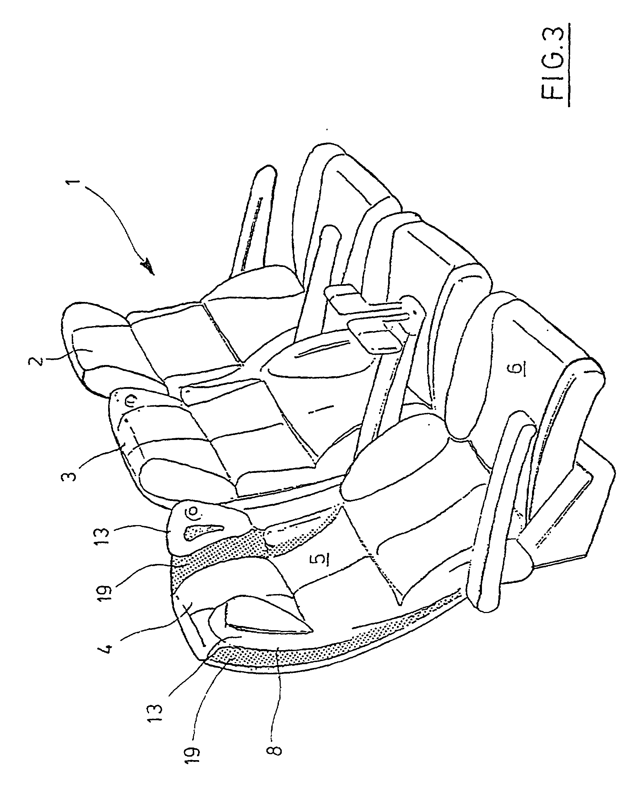

Fig. 3 zeigt eine Ausführung der Sitze 2, 3 oder 4 mit einem Lehnenbügel 8, der nur in den seitlichen Bereichen der Rückenlehne 5 bis zu den Sichtblenden 13 führt. Das in Fig. 2 beschriebene Kopfelement 21 fehlt hier. Die dort im Kopfelement 21 angeordneten Passagierversorgungselemente sind in dieser Ausgestaltung mit in den Sichtblenden 13 bzw. im Lehnenbügel 8 angeordnet. Abdeckmittel 19 zwischen Lehnenbügel 8 und geneigter Rückenlehne 5 beschränken sich ebenfalls auf den seitlichen Bereich als seitliche Verkleidung, die am Sitz 4 schraffiert dargestellt sind. Bei hochgestellter Rückenlehne 5 ist diese seitliche Verkleidung durch den Lehnenbügel 8 verdeckt.

## Patentansprüche

1. Passagiersitz (2, 3, 4) mit einer Versorgungseinheit (8) für Passagiere, insbesondere in einer Passagierkabine eines Flugzeuges, wobei die Versorgungseinheit (8) mit Komfort- und Bedienelementen, wie Leseleuchte (14), Stewardruftaste, Lautsprecher (15), Luftdüse (17), Sauerstoffmaske (16) und -generator (23) und optische Anzeigeelemente (22) ausgestattet ist und mindestens eine Zuführleitung (11) zwischen einer Versorgungsleitung und der Versorgungseinheit (8) vorgesehen ist, **dadurch gekennzeichnet, daß** die Versorgungseinheit (8) als funktional separates Bauteil in Ergänzung des Passagiersitzes (2, 3, 4) angeordnet und als Lehnenbügel (8) ausgebildet ist, der zumindest teilweise die Rückenlehne (5) umrahmt und ortsfest, vorzugsweise am Traggestell (7) angebracht ist.

2. Passagiersitz nach Anspruch 1,
**dadurch gekennzeichnet, daß**
zwischen Lehnenbügel (8) und verstellbarer Rückenlehne (5) Abdeckmittel (19) vorgesehen sind.

3. Passagiersitz nach Anspruch 2,
**dadurch gekennzeichnet, daß**
die Abdeckmittel (19) als faltenbalgartige Kapuze zumindest den seitlichen Rückenlehnenbereich umsäumen, wobei sie zwischen Rückenlehne (5) und dem Lehnenbügel (8) bei Verstellung der Rückenlehne (5) in Schrägposition eine Abschirmung zum Nachbarsitz ermöglichen.

4. Passagiersitz nach einem der Ansprüche 1 bis 3,
**dadurch gekennzeichnet, daß**
der Lehnenbügel (8) zumindest bereichsweise hohl ausgeführt ist.

5. Passagiersitz nach einem der Ansprüche 1 bis 4,
**dadurch gekennzeichnet, daß**
am rückwärtigen Teil der Versorgungseinheit (8) Komfort- oder Bedienelemente angeordnet sind, die für den hinteren Passagiersitz Versorgungsfunktionen übernehmen.

6. Passagiersitz nach einem der Ansprüche 1 bis 5,
**dadurch gekennzeichnet, daß**
im oberen Bereich des Lehnenbügels (8) in Sehhöhe eines Passagieres eine herausklappbare Projektionseinrichtung (22) vorgesehen ist.

7. Passagiersitz nach einem der Ansprüche 1 bis 6,
**dadurch gekennzeichnet, daß**
die Versorgungseinheiten (8) einer Sitzgruppe (1) über ein flexibles Verbindungsrohr (11) mit einer vorzugsweise im Fußbodenbereich der Kabinenseitenwand verlaufenden Versorgungsleitung adaptiert ist.

8. Passagiersitz nach einem der Ansprüche 1 bis 6,
**dadurch gekennzeichnet, daß**
die Versorgungseinheit (8) an der Fußbodenstruktur befestigt ist, wobei sie an einer im Sitzschienenbereich angeordneten Versorgungsleitung adaptiert ist.

## Claims

1. Passenger seat (2, 3, 4) with a service unit (8) for passengers, particularly in a passenger cabin of an aircraft, the said service unit (8) being equipped with comfort elements and operating elements, such as a reading light (14), steward-summoning button, loudspeaker (15), air nozzle (17), oxygen mask (16), oxygen-generator (23) and optical indicating elements (22), and at least one feed line (11) being provided between a supply line and the service unit (8),
**characterised in that**
the service unit (8) is disposed as a functionally separate unit supplementing the passenger seat (2, 3, 4) and is constructed as a backrest hoop (8) which at least partially frames the backrest (5) and is attached in a stationary manner, preferably to the supporting structure (7).

2. Passenger seat according to claim 1,
**characterised in that**
covering means (19) are provided between the backrest hoop (8) and the adjustable backrest (5).

3. Passenger seat according to claim 2,
**characterised in that**
the covering means (19) border at least the lateral region of the backrest as a bellows-like hood, the said covering means permitting, between the backrest (5) and the backrest hoop (8), screening in relation to the neighbouring seat when the backrest (5) is adjusted into the oblique position.

4. Passenger seat according to one of claims 1 to 3,
**characterised in that**
the backrest hoop (8) is of hollow design, at least in certain regions.

5. Passenger seat according to one of claims 1 to 4,
**characterised in that**
comfort elements or service elements which undertake service functions for the passenger seat behind, are disposed on the rearward part of the service unit (8).

6. Passenger seat according to one of claims 1 to 5,
**characterised in that**
a projection apparatus (22) which can be folded out is provided in the upper region of the backrest hoop (8) at a passenger's level of vision.

7. Passenger seat according to one of claims 1 to 6,
**characterised in that**
the service units (8) of.a group of seats (1) are fitted, via a flexible connecting tube (11), to a supply line which preferably extends in the floor region of the side wall of the cabin.

8. Passenger seat according to one of claims 1 to 6,
**characterised in that**
the service unit (8) is fastened to the floor structure, the said service unit being fitted to a supply line disposed in the region of the seat rails.

## Revendications

1. Siège pour passagers (2, 3, 4) avec unité de services (8) pour passagers, et plus particulièrement dans une cabine de passagers d'un avion, l'unité de services (8) étant équipée d'éléments de confort et de services comme un feu à lire (14), un bouton pour appeler le steward, un haut-parleur (15), un gicleur d'air (17), un masque à oxygène (16), un générateur d'oxygène (23) et des éléments d'affichage optique (22) et au moins une conduite de distribution (11) étant prévue entre une conduite d'alimentation et l'unité de services (8), et **caractérisé en ce que** l'unité de services (8) est disposé comme un élément fonctionnel séparé complétant le siège pour passagers (2, 3, 4) et se présente sous la forme d'une bride de dossier (8) encadrant au moins partiellement le dossier et disposé de manière rigide, de préférence sur le cadre porteur (7).

2. Siège pour passagers selon la revendication 1, **caractérisé en ce que** des moyens de recouvrement (19) sont prévus entre la bride de dossier (8) et le dossier réglable (5)

3. Siège pour passagers selon la revendication 1, **caractérisé en ce que** un capuchon de recouvrement en forme de soufflet borde au moins la zone de dossier latérale, offrant par la même occasion, entre le dossier (5) et la bride de dossier (8), un écran par rapport au siège voisin en cas d'inclinaison du dossier.

4. Siège pour passagers selon une des revendications 1 à 3, **caractérisé en ce que** la bride de dossier (8) est creuse, au moins par endroits.

5. Siège pour passagers selon une des revendications 1 à 4, **caractérisé en ce que** des éléments de confort et de services assurant les fonctionnalités de service pour le siège de passagers arrière sont disposés sur la partie arrière de l'unité de services (8).

6. Siège pour passagers selon une des revendications 1 à 5, **caractérisé en ce que** un système de projection (22) rabattable est prévu dans la zone supérieure de la bride de dossier (8), à hauteur de regard des passagers.

7. Siège pour passagers selon une des revendications 1 à 6, **caractérisé en ce que** les unités de service (8) d'un groupe de sièges (1) sont raccordées, via un tuyau flexible (11), à une conduite d'alimentation s'étendant de préférence dans la zone de plancher de la paroi de cabine latérale.

8. Siège pour passagers selon une des revendications 1 à 6, **caractérisé en ce que** l'unité de services (8) est fixée sur la structure de plancher et raccordée à une conduite d'alimentation située dans la zone des rails de sièges.
